(19) Europäisches Patentamt
European Patent Office
Office européen des brevets

(11) Veröffentlichungsnummer: **0 278 441**
**A2**

# (12) EUROPÄISCHE PATENTANMELDUNG

(21) Anmeldenummer: **88101757.8**

(51) Int. Cl.[4]: **G11B 7/24**

(22) Anmeldetag: **06.02.88**

(30) Priorität: **10.02.87 DE 3703985**

(43) Veröffentlichungstag der Anmeldung: **17.08.88 Patentblatt 88/33**

(84) Benannte Vertragsstaaten: **BE CH DE ES FR GB IT LI NL SE**

(71) Anmelder: **BASF Aktiengesellschaft**
**Carl-Bosch-Strasse 38**
**D-6700 Ludwigshafen(DE)**

(72) Erfinder: **Schrott, Wolfgang, Dr.**
**Bruessseler Ring 45**
**D-6700 Ludwigshafen(DE)**
Erfinder: **Albert, Bernhard, Dr.**
**Rietburgstrasse 13**
**D-6701 Maxdorf(DE)**
Erfinder: **Neumann, Peter, Dr.**
**Franz-Schubert-Strasse 1**
**D-6908 Wiesloch(DE)**
Erfinder: **Benthack-Thoms, Heidi, Dr.**
**Wilhelm-Busch-Strasse 18**
**D-6703 Limburgerhof(DE)**

## (54) Optisches Aufzeichnungsmedium, enthaltend einen Azuleniumfarbstoff.

(57) Optisches Aufzeichnungsmedium aus einem Träger und einer gegenüber Laserlicht empfindlichen Schicht, die einen Azuleniumfarbstoff als Speichermaterial und gegebenenfalls ein Bindemittelt enthält, erhältlich durch Aufschleudern einer Lösung, enthaltend einen Azuleniumfarbstoff, der Formel

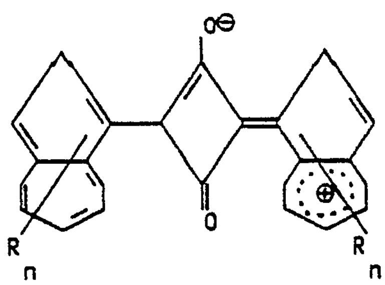

in der R gegebenenfalls substituiertes $C_1$-$C_6$-Alkyl und n 1, 2 oder 3 bedeuten, gegebenenfalls ein Bindemittel und wenigstens ein Lösungsmittel, das eine Verdunstungszahl von mindestens 4 besitzt und in dem ein Azuleniumfarbstoff der obengenannten Formel eine Löslichkeit von mindestens 5 g/l aufweist, auf einen transparenten Träger auf der Basis von Kunststoff oder Glas.

EP 0 278 441 A2

## Optisches Aufzeichnungsmedium, enthaltend einen Azuleniumfarbstoff

Die vorliegende Erfindung betrifft ein neues optisches Aufzeichnungsmedium aus einem Träger und einer gegenüber Laserlicht empfindlichen Schicht, die einen Azuleniumfarbstoff als Speichermaterial und gegebenenfalls ein Bindemittelt enthält, erhältlich durch Aufschleudern einer Lösung, enthaltend einen Azuleniumfarbstoff, gegebenenfalls ein Bindemittel und wenigstens ein Lösungsmittel, das eine Verdunstungszahl von mindestens 4 besitzt und in dem der Azuleniumfarbstoff eine Löslichkeit von mindestens 5 g/l aufweist, auf einen transparenten Träger auf der Basis von Kunststoff oder Glas.

Aufzeichnungsmaterialien, die mit Strahlen hoher Energiedichte, beispielsweise Laserlicht, eine lokal begrenzte Zustandsänderung erfahren, sind bekannt. Mit einer solchen thermisch ausgelösten Zustandsänderung, wie Verdampfen, Änderung des Fließverhaltens oder Ausbleichen, ist eine Änderung der optischen Eigenschaften, z.B. der Absorption durch Änderung des Absorptionsmaximums oder der Extinktion verbunden, welche zur Informations-oder Datenaufzeichnung ausgenutzt werden kann.

Die bekannten Informationsaufzeichnungsmaterialien bestehen aus einem Träger, auf den dünne Schichten von anorganischen Materialien, z.B. Metalle, Halbmetalle, Legierungen oder Chalkogenglas, oder dünne Schichten von organischen Verbidungen, z.B. IR-Farbstoffe, aufgebracht sind. Die dünnen Schichten werden beispielsweise durch Aufdampfen im Vakuum, Aufschleudern oder Zerstäubungstechniken erzeugt.

Für die Anwendung als Speichermedium ist es erforderlich, daß sich die amorphen Schichten über längere Zeiträume nicht verändern. Alterungsprozesse, wie Kristallisation oder Ausbleichen durch Licht und Wärme, welche die Morphologie der Speicherschicht verändern, treten bei dünnen, aufgedampften Schichten relativ häufig auf.

Aus der DE-A-3 320 674 ist nun ein optisches Aufzeichnungsmedium bekannt, dessen Träger aus Glas mit einer aufgedampften Aluminiumschicht besteht, und auf den mittels Spin-Coating eine Dispersion aus einer Nitrocelluloselösung und 1,3-Bis(1,4-dimethyl-7-isopropylazulen-3-yl)quadratsäure in Methylethylketon aufgebracht wurde. Es hat sich jedoch gezeigt, daß ein optischer Speicher mit einer solchen Speicherschicht schwerwiegende Nachteile aufweist. So ist beispielsweise die Speicherschicht nicht homogen, sondern aus Einzelkristallen aufgebaut. Inhomogene, partikuläre Farbstoffschichten sind jedoch mit einem Laserlaufwerk entweder überhaupt nicht oder nur schwer fokussierbar und damit überhaupt nicht oder nur mangelhaft beschreibbar. Auch die Metallisierung, d.h. das Aufdampfen, z.B. der dünnen Aluminiumschicht auf den Träger bringt dabei keine Verbesserung, denn es sind starke Reflexionsschwankungen zu beobachten.

In der DE-A-3 320 674 wird weiterhin ein optisches Aufzeichnungsmedium beschrieben, das durch Aufdampfen der entsprechenden unsubstituierten Azulenquadratsäureverbindung sowie des 4,8-Dimethyl-6-phenylazulenderivats hergestellt wurde. Abgesehen davon, daß beim Verdampfungsprozess im Hochvakuum größere Mengen der zu verdampfenden Farbstoffe zersetzt werden, zeigen auch diese Speicher die obengenannten Nachteile.

Aufgabe der vorliegenden Erfindung war es, einen neuen optischen Speicher mit Azulenquadratsäurederivaten als Speichermaterialien bereitzustellen, der in einfacher Weise hergestellt werden kann, gut beschreibbar und anschließend auch gut lesbar ist, wobei das Signal:Rausch-Verhältnis möglichst hoch sein sollte.

Es wurde nun ein neues optisches Aufzeichnungsmedium aus einem Träger und einer gegenüber Laserlicht empfindlichen Schicht, die einen Azuleniumfarbstoff als Speichermaterial und gegebenenfalls ein Bindemittel enthält, gefunden, das erhältlich ist durch Aufschleudern einer Lösung, enthaltend einen Azuleniumfarbstoff der Formel I

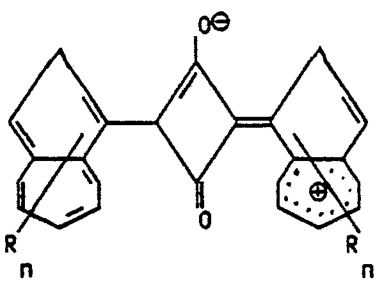 (I),

in der R $C_1$-$C_6$-Alkyl, das gegebenenfalls durch Halogen, Cyano, Amino oder $C_1$-$C_6$-Alkoxy substituiert ist,

und n 1, 2 oder 3 bedeuten, gegebenenfalls ein Bindemittel und wenigstens ein Lösungsmittel, das eine Verdunstungszahl von mindestens 4 besitzt und in dem ein Azuleniumfarbstoff der Formel I eine Löslichkeit von mindestens 5 g/l aufweist, auf einen transparenten Träger auf der Basis von Kunststoff oder Glas bei einer Temperatur von 10 bis 50°C, wobei die aufzuschleudernde Lösung einen Feststoffgehalt von 0,1 bis 15 Gew.%, bezogen auf die Lösung, aufweist und 0 bis 50 Gew.%, bezogen auf den Feststoffgehalt der aufzuschleudernden Lösung, eines Bindemittels enthält.

Bevorzugt ist dabei ein optisches Aufzeichnungsmedium, wie es erhalten wird, wenn man eine Lösung aufschleudert, die 10 bis 20 Gew.%, bezogen auf den Feststoffgehalt der aufzuschleudernden Lösung, eines Bindemittels enthält.

Weiterhin bevorzugt ist ein optisches Aufzeichnungsmedium, wie es erhalten wird, wenn man eine Lösung aufschleudert, die einen Feststoffgehalt von 1 bis 5 Gew.%, bezogen auf die Lösung, aufweist.

Das erfindungsgemäße optische Aufzeichnungsmedium enthält als Speichermaterial einen Azuleniumfarbstoff der Formel I. R in Formel I bedeutet beispielsweise Methyl, Ethyl, Propyl, Isopropyl, Butyl, Isobutyl, sec-Butyl, tert-Butyl, Pentyl, Isopentyl, sec-Pentyl, tert-Pentyl, Hexyl, 2-Methylpentyl; Fluormethyl, Chlormethyl, Difluormethyl, Trifluormethyl, Trichlormethyl, 2-Fluorethyl, 2-Chlorethyl, 2-Bromethyl, 1,1,1-Trifluorethyl, Heptafluorpropyl, 4-Chlorbutyl, 5-Fluorpentyl, 6-Chlorhexyl; Cyanomethyl, 2-Cyanoethyl, 3-Cyanopropyl, 2-Cyanobutyl, 4-Cyanobutyl, 5-Cyanopentyl, 6-Cyanohexyl; 2-Aminoethyl, 2-Aminopropyl, 3-Aminopropyl, 2-Aminobutyl, 4-Aminobutyl, 5-Aminopentyl, 6-Aminohexyl, 2-Methoxyethyl, 2-Ethoxyethyl, 2-Propoxyethyl, 2-Isopropoxyethyl, 2-Butoxyethyl, 2-Methoxypropyl, 2-Ethoxypropyl, 3-Methoxypropyl, 3-Ethoxypropyl, 4-Methoxybutyl, 4-Ethoxybutyl, 4-Isopropoxybutyl, 5-Methoxypentyl, 5-Ethoxypentyl oder 6-Methoxyhexyl.

Bevorzugt ist ein optisches Aufzeichnungsmedium, erhältlich durch Aufschleudern einer Lösung, die einen Azuleniumfarbstoff der Formel I, in der R $C_1$-$C_4$-Alkyl und n 3 bedeuten, enthält.

Besonders bevorzugt ist ein optisches Aufzeichnungsmedium, wie es erhalten wird, wenn man eine Lösung aufschleudert, die den Azuleniumfarbstoff der Formel II

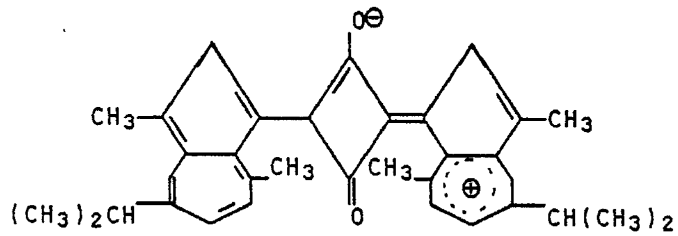

(II)

enthält.

Azuleniumfarbstoffe der Formel I sind teilweise bekannt und beispielsweise in Angew. Chem. 78, Seite 937 (1966), oder in der EP-A-187 015 beschrieben oder können nach den dort genannten Verfahren hergestellt werden.

Als transparente Träger kommen Glas oder Kunststoffe in Betracht. Geeignete Kunststoffe sind beispielsweise Poly(meth)acrylate, Polycarbonate, Polyester, Epoxide, Polyolefine (z.B. Polymethylpenten), Polyamid, Polyvinylchlorid, Polystyrol oder Polyvinylester.

Ein bevorzugtes Aufzeichnungsmedium weist einen Träger aus Polycarbonat oder Poly(meth)acrylaten, insbesondere Polymethylmethacrylat auf.

Wie oben bereits ausgeführt kann die aufzuschleudernde Lösung frei von Bindemitteln sein. Vorzugsweise enthält sie aber Bindemittel. Für diesen Fall kommen als solche z.B. Polyorganosiloxane, Epoxide, Poly(meth)acrylate, Polystyrolhomo-oder -copolymerisate, Polyvinylcarbazol, Polyvinylpyrrolidon, Polyimidazolcopolymere, Polyvinylestercopolymere, Polyvinylethercopolymere, Polyvinylidenchloridcopolymere, Acrylnitrilcopolymere, Polyvinylchlorid oder dessen Copolymere in Betracht.

Ein bevorzugtes Aufzeichnungsmedium weist ein Bindemittel auf Basis eines Vinylpyrrolidon-Vinylacetat-Copolymeren oder eines Polyvinylchlorid-Polyvinylether-Copolymeren auf.

Das erfindungsgemäße optische Aufzeichnungsmedium ist erhältlich durch Aufschleudern einer Lösung, enthaltend einen Azuleniumfarbstoff I, gegebenenfalls ein Bindemittel und wenigstens ein Lösungsmittel, das eine Verdunstungszahl von mindestens 4, vorzugsweise von mindestens 6 besitzt und in dem ein Azuleniumfarbstoff der Formel I eine Löslichkeit von mindestens 5 g/l, vorzugsweise mindestens 10 g/l aufweist, auf den Träger bei einer Temperatur von 10 bis 50°C, vorzugsweise 20 bis 40°C.

Der Begriff der Verdunstungszahl ist an sich bekannt und in DIN 53 170 sowie DIN 53 249 festgelegt.

Geeignete Lösungsmittel sind z.B. Bromoform, 1,1,2-Trichlorethan oder deren Mischungen. Dies gilt

insbesondere für ein optisches Aufzeichnungsmedium, das den Azuleniumfarbstoff der Formel II enthält.

Wie bereits ausgeführt, kann man sowohl einzelne Lösungsmittel, die die genannten Voraussetzungen erfüllen, als auch deren Mischungen verwenden. In manchen Fällen kann es auch vorteilhaft sein, bis zu ca. 10 Vol.% solcher Lösungsmittel zuzumischen, die die oben genannten Voraussetzungen nicht erfüllen. Solche Lösungsmittel sind z.B. Toluol, Xylol, 2-Methoxyethanol, Diacetonalkohol oder 1,1,1-Trichlorethan.

Ganz besonders bevorzugt ist ein Aufzeichnungsmedium, das erhältlich ist durch Aufschleudern einer Lösung, die Bromoform als Lösungsmittel enthält und die den Azuleniumfarbstoff der Formel II enthält.

Gegebenenfalls kann die Lösung noch bis zu 5 Gew.%, bezogen auf den Feststoffgehalt der aufzuschleudernden Lösung, Additive, wie Antioxidantien, Singlett-Sauerstoff-Quencher oder UV-Absorber enthalten.

Unter Aufschleudern ist das Aufbringen der Lösung auf den in Rotation befindlichen Träger, der zweckmäßig eine runde Form aufweist, zu verstehen. Es ist aber auch möglich, die Lösung auf den zunächst ruhenden Träger aufzubringen und ihn anschließend in Rotation zu versetzen. Das Aufgeben der Lösung auf den Träger erfolgt zweckmäßig mit einer Spritze oder Kapillaren oder mittels einer mechanischen Pumpe.

Die Rotation des Trägers erfolgt im allgemeinen mit einer Geschwindigkeit von 50 bis 7000 U/min, vorzugsweise 500 bis 5000 U/min, wobei das Aufschleudern der Lösung zweckmäßig bei geringerer Drehzahl (ca. 500 bis 4000 U/min) und das daran anschließende Trockenschleudern bei höherer Drehzahl (ca. 5000 bis 7000 U/min) vorgenommen wird.

Die Schichtdicke der gegenüber Laserlicht empfindlichen Schicht beträgt 40 bis 160 nm, vorzugsweise 80 bis 120 nm. Sie ist abhängig von der Drehzahl, von der Konzentration der aufzuschleudernden Lösung sowie von der Temperatur.

Beim erfindungsgemäßen optischen Aufzeichnungsmedium liegt die gegenüber Laserlicht empfindliche Schicht in Form einer homogenen, dünnen, glatten Schicht vor, die eine hohe optische Qualität aufweist. So liegen die Reflektivitätswerte im allgemeinen in einem Bereich der größer als 12 % ist.

Das neue Aufzeichnungsmedium ist ferner bei der Wellenlänge der verwendeten Laserlichtquelle hinreichend empfindlich, d.h. bei Einstrahlung von Lichtpulsen von wenigen nJ Energieinhalt, die auf Brennpunktdurchmesser von $\leq 1$ $\mu$m fokussiert sind, bilden sich Pits aus, wobei ein ausgezeichnetes Signal:Rausch-Verhältnis erzielt wird.

Festkörper-Injektionslaser, die im nahen Infrarot emittieren, vor allem der AlGaAs-Laser, der im Wellenlängenbereich zwischen etwa 750 und 950 nm arbeitet, eignet sich wegen der geringen Größe des Bauelementes, seines geringen Energiebedarfs und der Möglichkeit der direkten Modulation der optischen Ausgangsleistung durch Modulation des elektrischen Antriebstromes besonders gut als Laserlichtquelle.

Die nachfolgenden Beispiele sollen die Erfindung näher erläutern.

Beispiel 1

1 g 1,3-Bis(1,4-dimethyl-7-isopropylazulen-3-yl)quadratsäure wurde in 20 ml Bromoform bei Raumtemperatur über Nacht gerührt und danach mittels Überdruck durch eine Fritte (P4) gepreßt. Die resultierende tiefgrüne Lösung wurde dann mittels einer Spritze auf eine rotierende Scheibe aus Polymethylmethacrylat (Durchmesser 12 cm) aufgetragen. Die Lösung wurde dabei bei einer Drehzahl von 2000 U/min 25 sec lang abgeschleudert und anschließend 35 sec bei einer Drehzahl von 5000 U/min trockengeschleudert. Die erhaltene Schicht war homogen, pin-hole-frei und hochreflektierend.

Beispiel 2

Man verfuhr analog Beispiel 1, jedoch mit dem Unterschied, daß man anstelle von Bromoform 1,1,2-Trichlorethan als Lösungsmittel verwendete. Man erhielt eine homogene Schicht mit hoher Reflektivität.

Beispiel 3

Man verfuhr analog Beispiel 1, jedoch mit dem Unterschied, daß man anstelle von Bromoform ein Gemisch aus 10 ml Bromoform und 10 ml 1,1,2-Trichlorethan als Lösungsmittel verwendete. Man erhielt eine homogene Schicht mit hoher Reflektivität

Beispiel 4

Man verfuhr analog Beispiel 1, jedoch mit dem Unterschied, daß man anstelle von Bromoform ein Gemisch aus 1,1,2-Trichlorethan und Toluol als Lösungsmittel verwendete. Die jeweiligen Volumenverhältnisse der Lösungsmittelgemische sowie die Eigenschaften der resultierenden Schichten sind in Tabelle 1 aufgeführt.

Tabelle 1

| Volumenverhältnis 1,1,2-Trichlorethan:Toluol | Eigenschaften der Schicht |
|---|---|
| 95 : 5 | homogen, hohe Reflektivität |
| 85 : 15 | homogen, geringe Reflektivität |
| 70 : 30 | homogen, dünne Schicht, geringe Reflektivität, |
| 50 : 50 | homogen, sehr dünne Schicht, geringe Reflektivität |

Beispiel 5 (Vergleich)

0,3 g des in Beispiel 1 beschriebenen Farbstoffs wurden mit jeweils 6 ml der in Tabelle II genannten Lösungsmittel versetzt, bei Raumtemperatur über Nacht gerührt und danach mittels Überdruck durch eine Fritte (P4) gepreßt. Die resultierende Lösung wurde jeweils mittels einer Spritze, wie in Beispiel 1 beschrieben, aufgeschleudert.

Die verwendeten Lösungsmittel sowie die Eigenschaften der resultierenden Schichten sind in Tabelle 2 aufgeführt.

Tabelle 2

| Lösungsmittel | Eigenschaften der Schicht |
|---|---|
| Toluol | homogen, Absorption und Reflektivität gering |
| Xylol | homogen, Absorption und Reflektivität gering |
| Chlorbenzol | homogen, kaum Absorption |
| Methylenchlorid | äußerst inhomogen, Streifen, Mikrorisse |
| Chloroform | inhomogen, viele pin-holes |
| 1,1,1-Trichlorethan | homogen, Reflektivität sehr gering |
| 1,2-Dichlorethen | homogen, Absorption und Reflektivität gering |
| Butan-2-on | homogen, Absorption und Reflektivität sehr gering |

Beispiel 6

0,2 g des in Beispiel 1 beschriebenen Farbstoffs und 0,1 g eines Copolymeren aus Vinylchlorid und Vinylisobutylether (3:1) wurden in 14 g 1,1,2-Trichlorethan gelöst. Man verfuhr dann analog Beispiel 1 und erhielt eine homogene, pin-hole-freie Schicht mit hoher Reflektivität.

Beispiel 7

Man verfuhr analog Beispiel 6, jedoch mit dem Unterschied, daß man ein Bindemittel auf Basis eines Polyvinylacetat-Polyvinylpyrrolidon-Copolymeren (60:40) verwendete. Man erhielt eine homogene, pin-hole-freie Schicht mit hoher Reflektivität.

## Ansprüche

1. Optisches Aufzeichnungsmedium aus einem Träger und einer gegenüber Laserlicht empfindlichen Schicht, die einen Azuleniumfarbstoff als Speichermaterial und gegebenenfalls ein Bindemittelt enthält, erhältlich durch Aufschleudern einer Lösung, enthaltend einen Azuleniumfarbstoff der Formel I

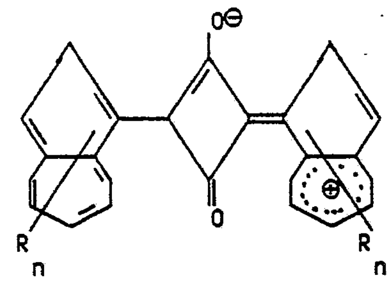

(I),

in der R $C_1$-$C_6$-Alkyl, das gegebenenfalls durch Halogen, Cyano, Amino oder $C_1$-$C_6$-Alkoxy substituiert ist, und n 1, 2 oder 3 bedeuten, gegebenenfalls ein Bindemittel und wenigstens ein Lösungsmittel, das eine Verdunstungszahl von mindestens 4 besitzt und in dem ein Azuleniumfarbstoff der Formel I eine Löslichkeit von mindestens 5 g/l aufweist, auf einen transparenten Träger auf der Basis von Kunststoff oder Glas bei einer Temperatur von 10 bis 50°C, wobei die aufzuschleudernde Lösung einen Feststoffgehalt von 0,1 bis 15 Gew.%, bezogen auf die Lösung, aufweist und 0 bis 50 Gew.%, bezogen auf den Feststoffgehalt der aufzuschleudernden Lösung eines Bindemittels enthält.

2. Optisches Aufzeichnungsmedium gemäß Anspruch 1, erhältlich durch Aufschleudern einer Lösung, die 10 bis 20 Gew.%, bezogen auf den Feststoffgehalt der aufzuschleudernden Lösung, eines Bindemittels enthält.

3. Optisches Aufzeichnungsmedium gemäß Anspruch 1, erhältlich durch Aufschleudern einer Lösung, die einen Feststoffgehalt von 1 bis 5 Gew.%, bezogen auf die Lösung, aufweist.

4. Optisches Aufzeichnungsmedium gemäß Anspruch 1, erhältlich durch Aufschleudern einer Lösung, die einen Azuleniumfarbstoff der Formel I, in der R $C_1$-$C_4$-Alkyl und n 3 bedeuten, enthält.